# EUROPEAN PATENT SPECIFICATION

(11) **EP 3 985 397 B1**
(45) Date of publication and mention of the grant of the patent: **03.04.2024**
(21) Application number: 20822662.1
(22) Date of filing: 19.05.2020
(51) Int. Cl.: G01N 35/00

(54) **AUTOMATIC ANALYSIS DEVICE**
AUTOMATISCHE ANALYSEVORRICHTUNG
DISPOSITIF D'ANALYSE AUTOMATIQUE

(30) Priority: 12.06.2019 JP 2019109326
(43) Date of publication of application: 20.04.2022
(73) Proprietor: Hitachi High-Tech Corporation, Minato-ku Tokyo 105-6409 (JP)
(72) Inventor: FUNAKOSHI, Sunao, Tokyo 100-8280 (JP); OKUSA, Takenori, Tokyo 105-6409 (JP); ISOSHIMA, Nobuyuki, Tokyo 105-6409 (JP); YOKOYAMA, Koki, Tokyo 105-6409 (JP)
(74) Representative: Mewburn Ellis LLP
(86) International application number: PCT/JP2020/019799
(87) International publication number: WO 2020/250630

(56) References cited:
- EP-A2- 1 898 218
- WO-A1-2014/185628
- JP-A- H01 201 162
- JP-A- 2007 024 714
- JP-A- 2008 089 571
- US-A1- 2015 355 061

## Description

### Technical Field

The present invention relates to an automatic analysis device, and more particularly, to an automatic analysis device including a mechanism for adjusting a temperature of a portion requiring temperature adjustment.

### Background Art

As an example of an automatic analysis device that can stably adjust temperature regardless of change in outside air temperature by realizing with a simple, space-saving, and cost-saving mechanism, Patent Document 1 describes that temperature of a heat transfer block is controlled intermittently, for example, the temperature of the heat transfer block is controlled based on opening and closing control of a replacement liquid electromagnetic valve.

US2015/355061A1 proposes a sample cooling device capable of effectively removing moisture in the air inside an accommodating chamber where a sample container is accommodated, and of preventing a problem caused by occurrence of frost, an autosampler provided with the same, and a sample cooling method.

### Citation List

### Patent Literature

PTL 1: JP-A-2017-26469

### Summary of Invention

### Technical Problem

The automatic analysis device is a device for optically measuring a reaction solution by dispensing a specimen solution containing an analysis target material and a reaction reagent into a reaction vessel and reacting the specimen solution with the reaction reagent. In such an automatic analysis device, for example, specific biological components and chemical materials contained in biological specimens such as blood, serum, and urine are detected.

In order to obtain sufficient analysis accuracy in the automatic analysis device, it is necessary to maintain the temperature of the reagents used for pretreatment and analysis of the specimen constant.

As a method of adjusting the temperature of the reagent in the automatic analysis device, as in Patent Document 1, it is known that the temperature of the reagent in the pretreatment process of analysis is adjusted by the Peltier element, and the liquid that is intermittently flowed to cool or heat the Peltier element is used, thereby the temperature of the reagent can be stably adjusted regardless of a change in the outside air temperature.

In this Patent Document 1, the temperature of the replacement liquid tank for storing the replacement liquid is adjusted by the Peltier element, but the temperature is controlled independently of the other portions that require being temperature-adjusted.

In the automatic analysis device, there exist a plurality of portions that require being adjusted at different temperature levels such as a portion that requires being adjusted to a low temperature, but as a result of intensive studies by the present inventors, it is clarified that there is a room for performing temperature control with less power consumption over the entire portions that require a plurality of temperature adjustments.

An object of the present invention is to provide an automatic analysis device capable of temperature-controlling a plurality of portions requiring temperature control with less power consumption as a whole.

### Solution to Problem

The present invention provides an automatic analysis device according to claim 1.

### Advantageous Effects of Invention

According to the present invention, it is possible to control the temperature of a plurality of portions that require the temperature control with less power consumption as a whole.
Problems, configurations, and effects other than those mentioned above will be clarified by the description of the following examples.

### Brief Description of Drawings

[Fig. 1] Fig. 1 is a diagram illustrating an overall configuration of an automatic analysis device according to Example 1 of the present invention, and a configuration of a temperature adjustment mechanism thereof.
[Fig. 2] Fig. 2 is a cross-sectional diagram of a Peltier unit of the automatic analysis device according to Example 1.
[Fig. 3] Fig. 3 is a cross-sectional diagram of a heat sink portion of the Peltier unit of the automatic analysis device according to Example 1.
[Fig. 4A] Fig. 4A is a diagram illustrating a structure of a radiator part of the automatic analysis device according to Example 1.
[Fig. 4B] Fig. 4B is a diagram illustrating a structure of the radiator part of the automatic analysis device according to Example 1.
[Fig. 5] Fig. 5 is a diagram illustrating a structure of a first radiator of the automatic analysis device according to Example 1.
[Fig. 6] Fig. 6 is a C-C' cross-sectional diagram of Fig. 5.
[Fig. 7] Fig. 7 is a diagram illustrating an overall configuration of a temperature adjustment mechanism of an automatic analysis device according to Example 2 of the present invention.
[Fig. 8] Fig. 8 is a diagram illustrating an overall configuration of a temperature adjustment mechanism of an automatic analysis device according to Example 3 of the present invention.
[Fig. 9] Fig. 9 is a diagram illustrating an overall configuration of a temperature adjustment mechanism of an automatic analysis device according to Example 4 of the present invention.
[Fig. 10] Fig. 10 is a diagram illustrating an overall configuration of a temperature adjustment mechanism of an automatic analysis device according to Example 5 of the present invention.

### Description of Embodiments

Hereinafter, examples of an automatic analysis device of the present invention will be described with reference to the attached drawings. It is noted that the automatic analysis device to which the present invention is applied is not particularly limited, and may be applied to various types of automatic analysis devices such as an automatic analysis device for immunological item analysis and an automatic analysis device for biochemical item analysis.

### <Example 1>

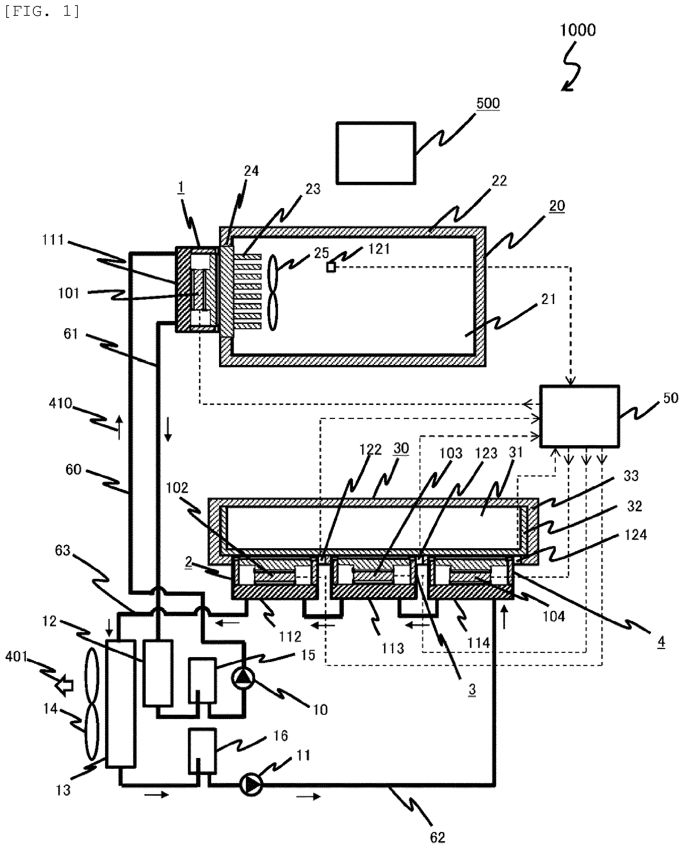

Example 1 of the automatic analysis device of the present invention will be described with reference to Figs. 1 to 6.

First, an outline of an overall configuration of the automatic analysis device and an outline configuration of a temperature adjustment mechanism will be described with reference to Fig. 1. Fig. 1 is a diagram illustrating the overall configuration of the automatic analysis device and the configuration of the temperature adjustment mechanism thereof of this Example.

An automatic analysis device 1000 illustrated in Fig. 1 is a device for reacting a specimen with a reagent and measuring physical properties of the reacted reaction solution and includes an analysis unit 500.

The analysis unit 500 may be configured with a mechanism other than the mechanisms described later among a mechanism for measuring the physical properties of the reaction solution, a mechanism for executing a treatment or a post-treatment of reacting a specimen with a reagent necessary for measuring the physical properties, and treatments associated with these various treatments, and can be configured to have a known configuration. In addition, known operations may also be used for those operations.

The automatic analysis device 1000 illustrated in Fig. 1 further includes an air-conditioned space 20 for performing a processing operation and the like of the reagent to be analyzed by the analysis unit 500, a reagent storage unit 30 for keeping the reagent to be used cold, and a control device 50 for controlling the operation of each mechanism described later.

Among these components, the air-conditioned space 20 is partitioned from a surrounding space by an insulating material 22, and is air-conditioned so as to keep a temperature of an internal air 21 constant.

The internal air 21 of the air-conditioned space 20 is circulated by a fan 25, and thus, the internal air is cooled or heated when passing through an internal fin 23 portion. The internal fin 23 is connected to a Peltier unit 1.

The reagent storage unit 30 is a space for storing the reagent, and an internal space 31 thereof is maintained at a relatively low temperature (for example, 5 to 10°C) as compared with the air-conditioned space 20. The internal space 31 is surrounded by a metal container 32 made of stainless steel or the like, and the surrounding thereof is partitioned from the surrounding space by an insulating material 33.

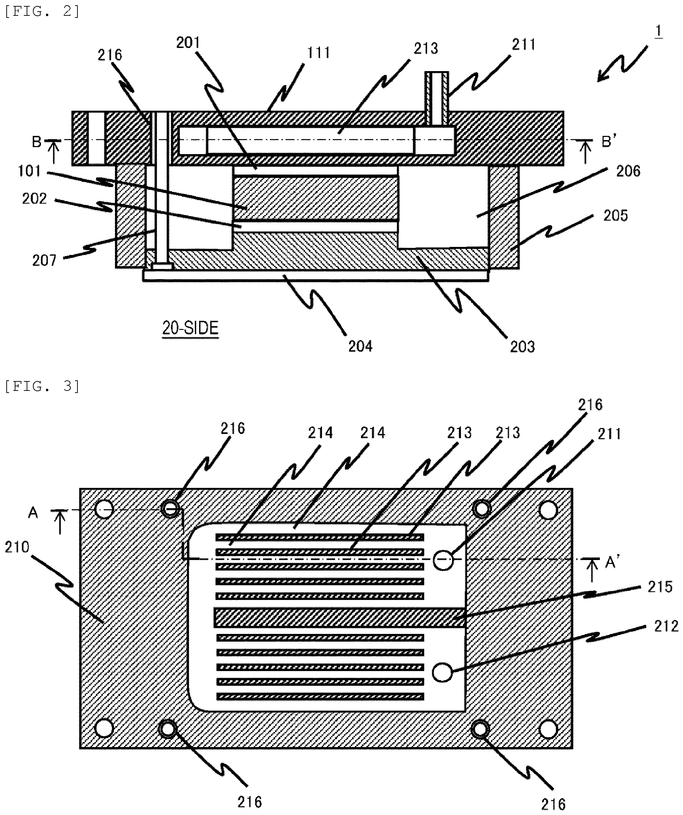

Next, the configuration for adjusting the air temperature of the air-conditioned space 20 will be described with reference to Figs. 2 and 3. Fig. 2 illustrates a cross section of the Peltier unit 1 which is a B-B' cross section of Fig. 3, and Fig. 3 illustrates a cross section of a heat sink portion of the Peltier unit 1 which is a A-A' cross section of Fig. 2

A Peltier element 101 that adjusts the air temperature of the air-conditioned space 20 is incorporated into the Peltier unit 1 illustrated in Figs. 1 to 3. The Peltier element 101 can switch a heat generating surface (a surface where the temperature is increased) and an endothermic surface (a surface where the temperature falls) of the Peltier element 101 depending on a direction of a current flowing by a power supply connected to a lead wire (not illustrated) thereof.

An output of the Peltier element 101, that is, a cooling capacity and a heating capacity, is controlled by repeating operation and stop with a predetermined current and changing a ratio of an operation time, that is, an operating rate. Alternatively, instead of changing the operating rate, a magnitude of the current applied to the Peltier element 101 may be directly changed.

The operating rate and the current are controlled by the control device 50 of Fig. 1 based on a detection temperature of a sensor and a target temperature. The controlling of the operating rate and the current is performed by, for example, proportional-integral-differential control (PID control).

The control device 50 can be realized by loading programs into a computer or a Field-Programmable Gate Array (FPGA) including a CPU, a memory, an interface, and the like and executing a calculation. These programs are stored in an internal recording medium or an external recording medium (not illustrated) in each configuration and are read and executed by the CPU.

It is noted that the control process of the operation of each mechanism of the control device 50 may be integrated into one program, may be divided into a plurality of programs, or may be a combination thereof. In addition, a portion or all of the programs may be realized by dedicated hardware or may be modularized. Furthermore, various programs may be provided to each device from a program distribution server, an internal recording medium, or an external recording medium.

As illustrated in Figs. 2 and 3, a heat diffusion plate 203 made of aluminum or the like is provided via a thermal interface 202 such as grease on the surface (lower side in Fig. 2, the air-conditioned space 20 side) of the Peltier element 101 of the side where the temperature control of a control object is performed.

The heat diffusion plate 203 is connected to a temperature control object, that is, a base 24 of the internal fin 23 in Fig. 1 via a thermal interface 204 such as grease.

In addition, as illustrated in Fig. 2, a heat sink 111 is connected via a thermal interface 201 such as grease on the surface (upper side in Fig. 2) of the Peltier element 101 of the opposite side where the temperature control of the control object is performed.

The heat sink 111 is a member for cooling or heating the Peltier unit 1 with a liquid refrigerant (hereinafter, referred to as a circulating liquid).

As illustrated in Fig. 2, the heat diffusion plate 203, the Peltier element 101, and the heat sink 111 are fixed in a state of being in close contact with each other by fastening a bolt 207 to a hole 216.

Furthermore, the heat diffusion plate 203 is surrounded by a resin thermal interface 204, an insulating material 205, and a space 206. It is noted that air can be used instead of the insulating material 205, and the insulating material can be disposed in the space 206.

The Peltier element 101 of this Example is energized so that, when the temperature detected by a temperature sensor 121 in Fig. 1 is higher than the target temperature, the temperature of the surface of the side (the heat diffusion plate 203 in Fig. 2, the side of the internal fin 23 in Fig. 1) of the control object is decreased, and the temperature of the surface of the side of the heat sink 111 on the opposite side is increased.

At this time, the base 24 of the internal fins of Fig. 1 and the internal fins 23 are cooled via the thermal interface 202, the heat diffusion plate 203, and the thermal interface 204, and the air the inside of the air-conditioned space 20 guided to the internal fins 23 by the fan 25 is cooled.

On the other hand, the side of the heat sink 111 of the Peltier element 101 is heated, and heat is dissipated to the circulating liquid flowing inside the heat sink 111 via the thermal interface 201 such as grease.

The circulating liquid is a medium for carrying heat, and pure water, ethylene glycol aqueous solution, and the like are used. In Fig. 1, the circulating liquid is sent to the heat sink 111 of the Peltier unit 1 through a tube 60 by a pump 10. An arrow 410 in Fig. 1 indicates the direction in which the circulating liquid flows.

In Figs. 1 to 3, the circulating liquid flowing through the tube 60 flows into the inside of the heat sink 111 from a tube connector 211 at the inlet of the heat sink 111, passes through the internal space partitioned by a partition 215, and flows out into a tube 61 from a tube connector 212.

A plurality of flow paths 214 interposed between fins 213 are formed in the internal space of the heat sink 111, and the circulating liquid flows therebetween. This circulating liquid takes heat from the Peltier element 101 connected to a casing 210 of the heat sink via the thermal interface 201 or applies heat to the Peltier element 101. The fins 213 play a role in increasing the heat transfer area and improving the heat exchange performance. Aluminum, copper, or the like is used as the material of the casing 210 and the fins 213 of the heat sink 111.

In Fig. 1, the circulating liquid heated by the heat sink 111 reaches a first radiator 12 which performs heat exchange between the circulating liquid that has exchanged heat with the heat sink 111 and the air in the atmosphere to be cooled by the air sent by a radiator fan 14 and is sucked into the pump 10 via a tank 15.

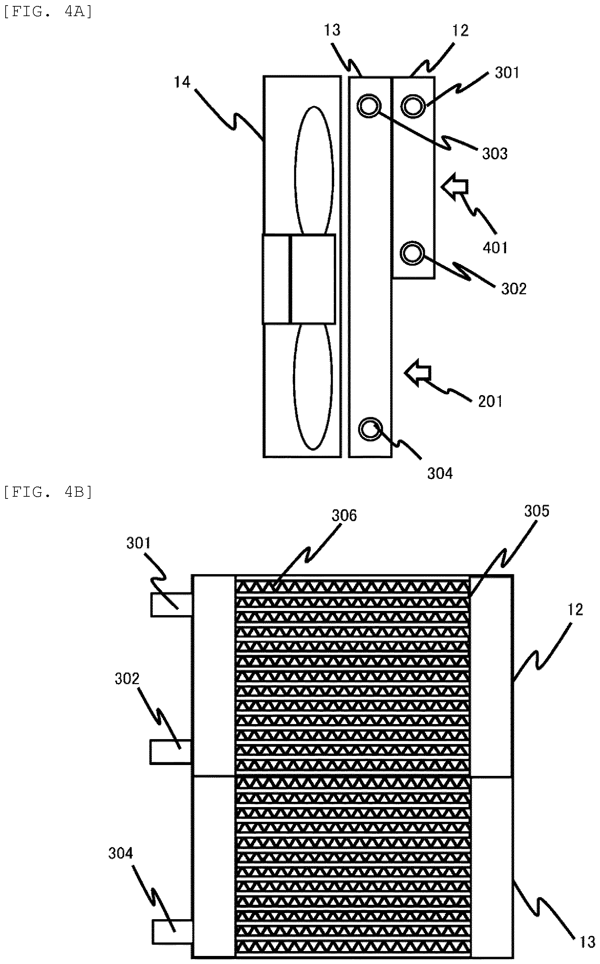

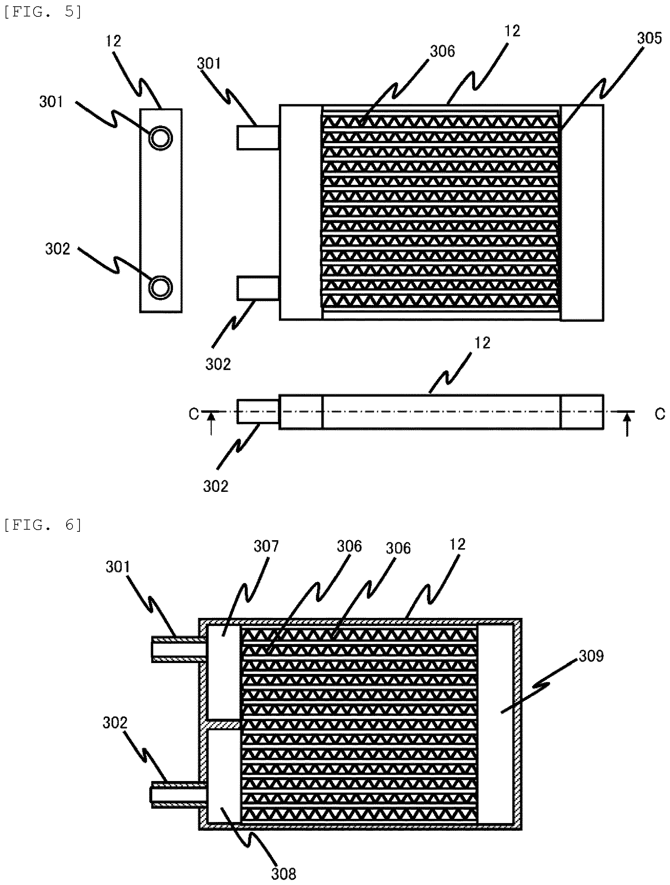

The details of the first radiator 12 will be described in detail later with reference to Figs. 4 and 5.

On the other hand, when the temperature detected by the temperature sensor 121 in Fig. 1 is lower than the target temperature, the Peltier element 101 is energized in the opposite direction to be operated so that the internal fin 23 side is heated, and the heat sink 111 side is cooled.

At this time, the circulating liquid cooled by the heat sink 111 reaches the first radiator 12, where the circulating liquid is heated by the air sent by the radiator fan 14. After that, the circulating liquid is sucked into the pump 10 via the tank 15 and sent to the heat sink 111 of the Peltier unit 1 through the tube 60 as described above.

A first loop is formed by the tubes 60 and 61 connecting the heat sink 111, the first radiator 12, and the pump 10.

Next, the reagent storage unit 30 and the configuration for controlling the temperature of the reagent storage unit 30 will be described.

As illustrated in Fig. 1, Peltier units 2, 3, and 4 are connected to the metal container 32 constituting the reagent storage unit 30. The metal container 32 is cooled by energizing Peltier elements 102, 103, and 104 incorporated in the Peltier units 2, 3, and 4 in the direction in which the side of the metal container 32 is cooled, and the internal space 31 and the contents thereof are cooled.

In addition, the circulating liquid for cooling and heating is sent to heat sinks 112, 113, and 114 of the Peltier units 2, 3, and 4 through a tube 62 by a pump 11.

Since the structures of the Peltier units 2, 3, and 4 are the same as those of the Peltier unit 1 described above, the details will be omitted.

The Peltier elements 102, 103, and 104 are controlled by the control device 50 so that the temperature of temperature sensors 122, 123, and 124 becomes the target temperature.

For example, when the temperature detected by the temperature sensor 122 provided on the outer surface of the metal container 32 of the reagent storage unit 30 is higher than the target temperature, the Peltier element 102 is controlled so as to energize in the direction in which the temperature on the side of the metal container 32 is decreased.

Similarly, when the temperature detected by the temperature sensor 123 is higher than the target temperature, the Peltier element 102 is energized in the direction in which the temperature on the side of the metal container 32 is decreased, and when the temperature detected by the temperature sensor 124 is higher than the target temperature, the Peltier element 104 is energized in the direction in which the temperature on the side of the metal container 32 is decreased.

At this time, the surfaces of the Peltier elements 102, 103, and 104 on the sides of the heat sinks 112, 113, and 114 generate heat, so that the temperature is increased, but the surfaces of the Peltier elements 102, 103, and 104 are cooled by the circulating liquid flowing through the heat sinks 112, 113, and 114.

The circulating liquid flows from the pump 11 through the tube 62 in the order of the heat sink 114 of the Peltier unit 4, the heat sink 113 of the Peltier unit 3, and the heat sink 112 of the Peltier unit 2 to be heated and reaches a second radiator 13 through a tube 63.

In the second radiator 13, the circulating liquid is cooled by the air sent by the radiator fan 14, so that the temperature is decreased, and the liquid is sucked into the pump 11 via the tank 16 so as to be sent to the Peltier unit 4.

A second loop is formed by the tubes 62 and 63 connecting the heat sinks 112, 113, and 114, the second radiator 13, and the pump 11 circulating the circulating liquid.

On the other hand, when the temperature detected by the temperature sensor 122 provided in the reagent storage unit 30 is lower than the target temperature, the Peltier element 102 is controlled so as to be energized in the direction in which the temperature on the side of the metal container 32 is increased. At this time, the temperature of the Peltier element 102 on the heat sink 112 side is decreased, but the temperature of the Peltier element 102 is heated by the circulating liquid flowing through the heat sink 112.

Similarly, when the temperature detected by the temperature sensor 123 is lower than the target temperature, the Peltier element 103 is energized in the direction in which the temperature on the side of the metal container 32 is increased. In addition, when the temperature detected by the temperature sensor 124 is higher than the target temperature, the Peltier element 104 is energized in the direction in which the temperature on the side of the metal container 32 is increased.

The surfaces of the Peltier elements 102, 103, and 104 on the heat sinks 112, 113, and 114 sides are cooled to be decreased in temperature, but the surfaces of the Peltier elements 102, 103, and 104 are heated by the circulating liquid flowing through the heat sinks 112, 113, and 114.

Next, the configuration of the radiator for adjusting the temperature of the circulating liquid will be described with reference to Figs. 4A to 6.

Figs. 4A and 4B are views illustrating the overall structures of the first radiator 12 and the second radiator 13, Fig. 5 is a view illustrating the structure of the first radiator 12, and Fig. 6 is a view illustrating a A-A' cross section Fig. 5.

In the automatic analysis device 1000 of this Example, as illustrated in Figs. 4A and 4B, the first radiator 12 having a small front area and the second radiator 13 having a large front area are disposed side by side in the direction (in the direction of an arrow 401) in which the air is sent by the radiator fan 14.

In the flow of the air generated by the radiator fan 14, the first radiator 12 having a small area is on the upstream side and the second radiator 13 having a large area is on the downstream side, and the first radiator 12 and the second radiator 13 are disposed in series so as to perform heat exchange.

Here, as illustrated in Fig. 4A and the like, since the area of the first radiator 12 is smaller than that of the second radiator 13, that the heat exchange area of the first radiator 12 is smaller than that of the second radiator 13.

As illustrated in Figs. 5 and 6, an inlet connector 301 and an outlet connector 302 of the circulating liquid are provided to the first radiator 12, and an inlet connector 303 and an outlet connector 304 of the circulating liquid are provided to the second radiator 13.

The first radiator 12 includes a flow path 305 through which the circulating liquid flows and fins 306 provided therebetween. The same also applies to the second radiator 13. Aluminum or the like is used as the material of the flow path 305 and the fin 306.

In Figs. 5 and 6, air flows between the fins 306 in a direction perpendicular to the paper surface. The circulating liquid flows in from the inlet connector 301, flows through each flow path 305 from a header 307, changes the direction of the flow at a turn unit 309, reaches an exit footer 308 from the flow path 305, and flows out from the outlet connector 302. The structure of the second radiator 13 is the same as that of the first radiator 12.

Next, the effect of this Example will be described.

In the automatic analysis device 1000 of this Example described above, considered is the case where the temperature around the device is relatively low due to in the winter or the like, but the temperature is higher than the target temperature of the reagent storage unit 30.

In this case, the temperature detected by the temperature sensor 121 of the air-conditioned space 20 is lower than the target temperature, and the temperature detected by the temperature sensors 122, 123, and 124 of the reagent storage unit 30 becomes higher than the target temperature.

At this time, the Peltier element 101 performs the operation of heating the side of the air-conditioned space 20, and the circulating liquid is cooled by the heat sink 111 and transported to the first radiator 12. On the other hand, the Peltier elements 102, 103, and 104 perform the operation of cooling the side of the reagent storage unit 30, and the circulating liquid of the heat sinks 112, 113, and 114 is heated and transported to the second radiator 13.

At this time, the air cooled by passing through the first radiator 12 cools the second radiator 13 according to the arrangement relationship as illustrated in Fig. 5 and the like.

That is, as compared with the case where each radiator is cooled independently, in the present invention, the amount of heat dissipated from the second radiator 13 is increased by additionally cooling by the first radiator 12, and the Peltier elements 102, 103, and 104 can cool the reagent storage unit 30 with a smaller current, that is, a smaller power consumption.

In addition, considered is the case where the temperature around the device is relatively high due to in the summer. In this case, the temperature detected by the temperature sensor 121 in the air-conditioned space 20 becomes higher than the target temperature.

For this reason, the circulating liquid is heated in the heat sink 111 to reach the first radiator 12, so that the air passing through the first radiator 12 is heated.

Here, since the target temperature of the air-conditioned space 20 is lower than the target temperature of the reagent storage unit 30 and the cooling load is smaller than that of the reagent storage unit 30, the heating amount of the circulating liquid in the heat sink 111 is relatively small.

For this reason, the temperature increase of the air that has passed through the first radiator 12 is also relatively small. Moreover, since the front area of the first radiator 12 is smaller than the front area of the second radiator 13, the circulating liquid in the second radiator 13 can be sufficiently cooled, so that the cooling that is the same as in the related art can be realized.

As described above, in the automatic analysis device 1000 of this Example, it is possible to perform the temperature control of the air-conditioned space 20 and the reagent storage unit 30 which require the temperature control with lower power consumption than the related art.

### <Example 2>

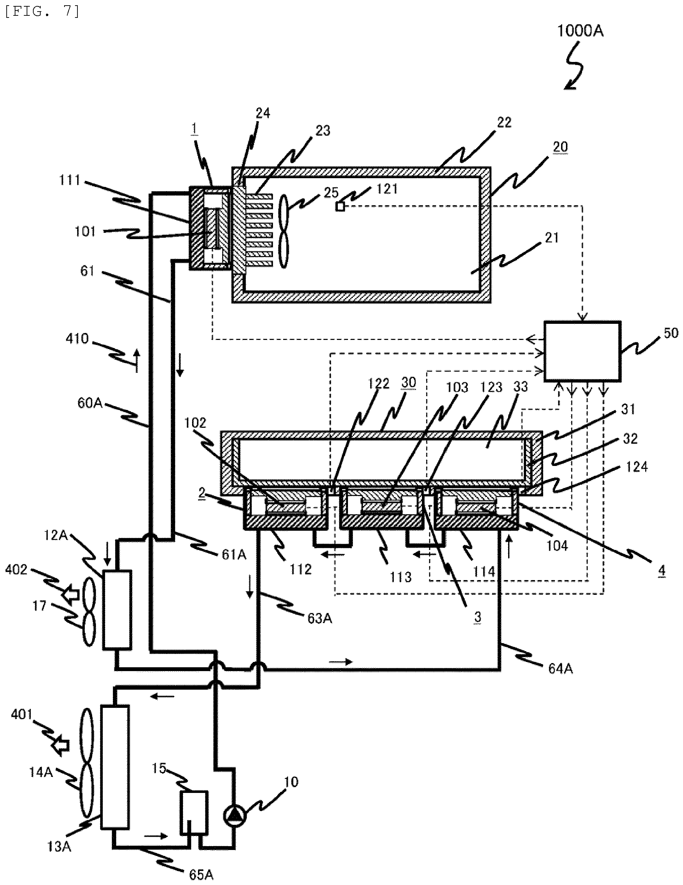

An automatic analysis device according to Example 2 of the present invention will be described with reference to Fig. 7. Fig. 7 is an overall configuration diagram of an automatic analysis device 1000A and a temperature adjustment mechanism thereof according to Example 2.

In Example 2, the same configurations as those in Example 1 are denoted by the same reference numerals, and the description thereof will be omitted. The same applies to the following examples. In addition, in Fig. 7 and later, the analysis unit 500 is omitted for the convenience of illustration.

In the automatic analysis device 1000 of Example 1, the first radiator 12 and the second radiator 13 are disposed so as to perform heat exchange, but in the automatic analysis device 1000A of this Example, a first radiator 12A and a second radiator 13B are disposed so as not to perform heat exchange with the air but to perform heat exchange with the circulating liquid.

Specifically, as illustrated in Fig. 7, a radiator fan 17 is disposed around the first radiator 12A, and the air is blown in the direction of an arrow 402. On the other hand, a radiator fan 14A is disposed around the second radiator 13, and the air is blown in the direction of the arrow 401.

The loop of the circulating liquid in this Example is not the two loops as in Example 1 but one big loop formed by a tube 64A which guides the circulating liquid that has exchanged heat with the first radiator 12A to the heat sinks 112, 113, and 114, a tube 63A which guides the circulating liquid that has exchanged heat with the heat sinks 112, 113, and 114 to a second radiator 13A, a tube 65A which guides the circulating liquid that has exchanged heat with the second radiator 13A to the pump 10, and a tube 60A which guides the liquid from the pump 10 to the heat sink 111.

In this Example, one pump 10 and one tank 15 are provided, and the circulating liquid sent by the pump 10 passes through the tube 60A, and flows into the heat sink 111 of the Peltier unit 1 provided in the air-conditioned space 20.

After that, the circulating liquid flows into the first radiator 12 via a tube 61A, and after the heat exchange, the circulating liquid flows into the heat sink 114 of the Peltier unit 4 provided to the reagent storage unit 30 via the tube 64A.

After flowing into the heat sink 114, the circulating liquid flows into the second radiator 13 via the tube 63A via the heat sink 113 of the Peltier unit 3 and the heat sink 112 of the Peltier unit 2. After further heat exchange in the second radiator 13 is performed, the circulating liquid returns to the pump 10 from the tank 15 via the tube 65A.

Other configurations and operations are substantially the same as those of the automatic analysis device 1000 of Example 1 described above, and the details will be omitted.

Next, the effect of the automatic analysis device 1000A of Example 2 will be described.

First, considered is the case where the temperature around the device is relatively low due to in the winter or the like, but the temperature is higher than the target temperature of the reagent storage unit 30.

In this case, the temperature detected by the temperature sensor 121 of the air-conditioned space 20 is lower than the target temperature, and the temperature detected by the temperature sensors 122, 123, and 124 of the reagent storage unit 30 becomes higher than the target temperature.

At this time, the circulating liquid is cooled in the heat sink 111 and transported to the first radiator 12A, but the radiator fan 17 of the first radiator 12A is stopped, and thus, the circulating liquid in a state where the circulating liquid is not so heated by the first radiator 12A is supplied to the heat sinks 112 of the Peltier units 2, 3, and 4.

With such a configuration and operation, the circulating liquid cooled in the heat sink 111 can be directly supplied to the heat sinks 112, 113, and 114 of the Peltier units 2, 3, and 4, so that the Peltier units 2, 3, and 4 can be efficiently cooled, and thus, it is possible to realize the temperature control with lower power consumption.

Next, considered is the case where the temperature around the device is relatively high due to in the summer.

In this case, the temperature detected by the temperature sensor 121 in the air-conditioned space 20 becomes higher than the target temperature. For this reason, the circulating liquid heated in the heat sink 111 reaches the first radiator 12A, and the circulating liquid cooled by the air blown by the radiator fan 17 is supplied to the heat sinks 112, 113, and 114 of the Peltier units 2, 3, and 4.

Therefore, since the circulating liquid cooled by the first radiator 12 is supplied to the heat sinks 112, 113, and 114, the Peltier units 2, 3, and 4 can be more efficiently cooled than the case of simply cooling the Peltier units, and thus, it is possible to realize the temperature control with lower power consumption.

As described above, similarly to the automatic analysis device 1000 of Example 1 described above, the automatic analysis device 1000A of this Example can also realize the temperature control of the air-conditioned space 20 and the reagent storage unit 30 with less power consumption than the related art.

### <Example 3>

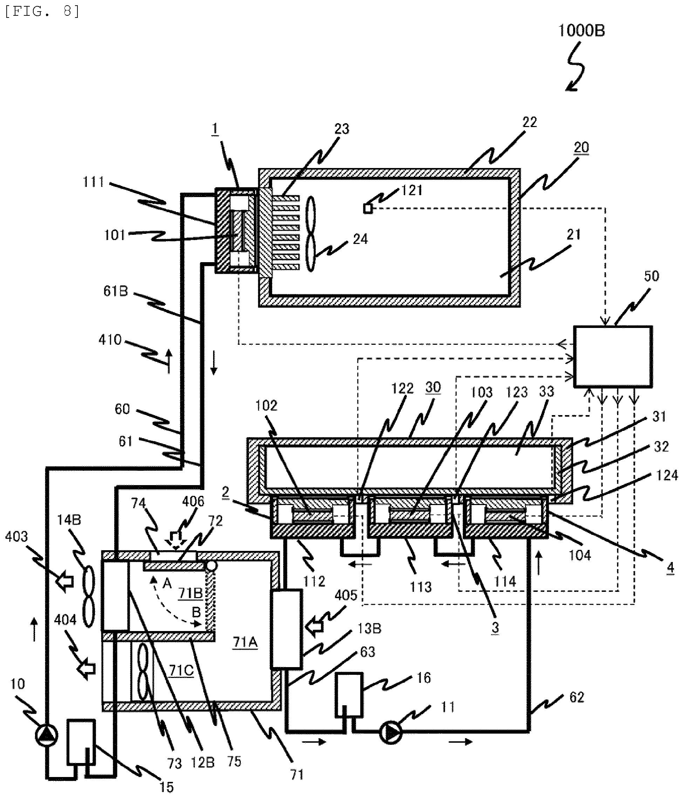

An automatic analysis device according to Example 3 of the present invention will be described with reference to Fig. 8. Fig. 8 is a configurational diagram of the automatic analysis device and a temperature adjustment mechanism thereof according to Example 3.

As illustrated in Fig. 8, an automatic analysis device 1000B of this Example is provided with a duct 71 at an outlet of the second radiator 13B. The downstream portion of the duct 71 is divided into two flow paths 71B and 71C by a partition 75. It is noted that the upstream portion of the duct 71 constitutes a first airflow path 71A which guides the air that has exchanged heat with the second radiator 13B to the exhaust port or a first radiator 12B.

Out of the two flow paths, the first radiator 12B is disposed on the one flow path 71B side, so that the air that has exchanged heat with the second radiator 13B passes through the first radiator 12B and is guided to the outside.

A damper 72 that switches the air guided to the flow path 71B between the air from the flow path 71A and the air from an air inlet port 74 is provided on the flow path 71B side. The position of the damper 72 is controlled by the control device 50.

The air inlet port 74 is provided at a position in front of the first radiator 12B of the flow path 71B and is an opening for guiding the air from the outside of the flow path 71B to the flow path 71B.

Nothing is disposed on the other flow path 71C side, and the air that has exchanged heat with the second radiator 13B is directly guided to the outside.

Considered is the case where the temperature around the automatic analysis device 1000B of this Example is relatively low due to in the winter or the like, but the temperature is higher than the target temperature of the reagent storage unit 30.

In this case, similarly to Example 1, the temperature detected by the temperature sensor 121 of the air-conditioned space 20 becomes lower than the target temperature, and the temperature detected by the temperature sensors 122, 123, and 124 of the reagent storage unit 30 becomes higher than the target temperature.

At this time, the circulating liquid cooled in the heat sink 111 is transported to the first radiator 12B via the tube 60, and the circulating liquid heated in the heat sinks 112, 113, and 114 is transported to the second radiator 13B via the tube 63.

At this time, the damper 72 of the duct 71 is set at the position A in Fig. 8. Accordingly, as indicated by an arrow 405 illustrated in Fig. 8, the air sucked into the second radiator 13B by a radiator fan 14B and the fan 73 is heated by exchanging heat with the circulating fluid, and after that, is distributed to the air passing through the first radiator 12B by the radiator fan 14B and the air directly exhausted by the fan 73.

Of the airs, since the air heated by the second radiator 13B exchanges heat when passing through the first radiator 12B to heat the circulating liquid, the heated circulating liquid is supplied to the heat sink 111, so that the power consumption of the Peltier element 101 for heating the air-conditioned space 20 can be reduced, and thus, energy-saving operation is realized. At this time, further power saving operation can be performed by appropriately adjusting the rotation speeds of the radiator fan 14B and the fan 73 to distribute the wind volume.

On the other hand, when the temperature around the device is relatively high due to in the summer or the like, the temperature detected by the temperature sensor 121 in the air-conditioned space 20 becomes higher than the target temperature. In this case, the circulating liquid heated by the heat sink 111 is sent to the first radiator 12B. At this time, the damper 72 is set to the position B.

For this reason, the air supplied to the first radiator 12B is supplied from the outside of the duct 71 through the air inlet port 74 as illustrated by an arrow 406 of the broken line illustrated in Fig. 8. On the other hand, all the air heated by heat that has exchanged in the second radiator 13B is exhausted by the fan 73 as indicated by an arrow 404 illustrated in Fig. 8.

For this reason, the air heated through the second radiator 13B does not pass through the first radiator 12B, so that sufficient cooling performance of the first radiator 12B is ensured.

At this time, in order to avoid frequent operations of the damper 72, the ambient temperature may be detected, and the position of the damper 72 may be determined to be any one of the position A and the position B accordingly.

Other configurations and operations are substantially the same as those of the automatic analysis device 1000 of Example 1 described above, and the details will be omitted.

In the automatic analysis device 1000B as in Example 3 of the present invention, substantially the same effect as that of the automatic analysis device 1000 and the like in Example 1 described above can be obtained.

### <Example 4>

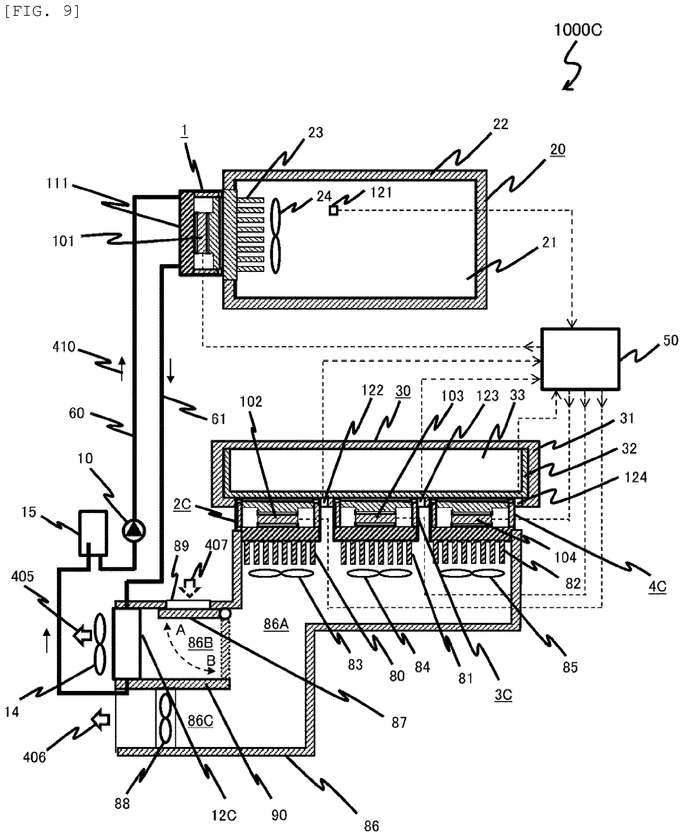

An automatic analysis device according to Example 4 of the present invention will be described with reference to Fig. 9. Fig. 9 is a configurational diagram of the automatic analysis device and a temperature adjustment mechanism thereof according to Example 4.

As illustrated in Fig. 9, in an automatic analysis device 1000C of this Example, Peltier units 2C, 3C, and 4C that adjust the temperature of the reagent storage unit 30 are replaced with the heat sinks 112, 113, and 114 similarly to the automatic analysis device 1000 of Example 1, and air cooling fins 80, 81, and 82 and a duct 86 are provided.

For this reason, the heat exhausted from the Peltier elements 102, 103, and 104 is transferred to the air cooling fins 80, 81, and 82, respectively, and the heat is further dissipated to the air flowing between the fins 80, 81, and 82 by the fans 83, 84, and 85, respectively. The air containing the heat exhausted from the fans 83, 84, and 85 is sent to the inside of the duct 86. The upstream portion of the duct 86 constitutes a fourth airflow path 86A which guides the air that has exchanged heat with the fins 80, 81, and 82 to the exhaust port or a first radiator 12C.

Furthermore, the downstream portion of the duct 86 is divided into two flow paths 86B and 86C by a partition 90.

Out of the two flow paths, the first radiator 12C is disposed on the one flow path 86B side, so that the air that has exchanged heat with the fins 80, 81, and 82 passes through the first radiator 12C and is guided to the outside.

A damper 87 that switches the air guided to the flow path 86B between the air from the flow path 86A and the air from the air inlet port 89 is provided on the flow path 86B side. The position of the damper 87 is controlled by the control device 50.

The air inlet port 89 is provided at a position in front of the first radiator 12C of the flow path 86B and is an opening for guiding the air from the outside of the flow path 86B to the flow path 86B.

Nothing is disposed in the other flow path 86C, and the air supplied from the flow path 86A that has exchanged heat with the fins 80, 81, and 82 is directly guided to the outside.

Other configurations and operations are substantially the same as those of the automatic analysis device 1000 of Example 1 described above, and the details will be omitted.

In the automatic analysis device 1000C of this Example, considered is the case where the temperature around the device is relatively low due to in the winter or the like, but the temperature is higher than the target temperature of the reagent storage unit 30.

In this case, the temperature detected by the temperature sensor 121 of the air-conditioned space 20 is lower than the target temperature, and the temperature detected by the temperature sensors 122, 123, and 124 of the reagent storage unit 30 becomes higher than the target temperature.

Therefore, the circulating liquid is cooled in the heat sink 111 and transported to the first radiator 12C. At this time, the damper 87 of the duct 86 is set to the position A. Accordingly, the air from the air cooling fins 80, 81, and 82 is distributed to the air indicated by the arrow 405 illustrated in Fig. 9 passing through the first radiator 12C by a radiator fan 14C and the air indicated by the arrow 406 illustrated in Fig. 9 being directly exhausted by the fan 88.

Since the circulating liquid flowing through the first radiator 12C is heated by the air passing through the first radiator 12C, the heated circulating liquid is supplied to the heat sink 111, so that the power consumption of the Peltier element 101 for heating the air-conditioned space 20 can be reduced.

At this time, by appropriately adjusting the rotation speeds of the radiator fan 14C and the fan 88 to distribute a wind volume, it is possible to operate with even lower power.

On the other hand, when the temperature around the device is relatively high in the summer or the like, the temperature detected by the temperature sensor 121 in the air-conditioned space 20 becomes higher than the target temperature.

For this reason, the damper 87 is set at the position B, the air supplied to the first radiator 12C is supplied from the outside of the duct 86 through the air inlet port 89 as illustrated by an arrow 407 of the broken line, and the air sent from the fans 83, 84, and 85 is exhausted by the fan 88 toward the arrow 406.

Accordingly, since the heated air from the fans 83, 84, and 85 does not pass through the first radiator 12C, sufficient cooling performance of the first radiator 12C is ensured.

Even in the automatic analysis device 1000C as in Example 4 of the present invention, since the Peltier unit 1 can be efficiently heated in substantially the same manner as in the above-mentioned automatic analysis device 1000 of Example 1, it is possible to realize the temperature control with lower power consumption.

### <Example 5>

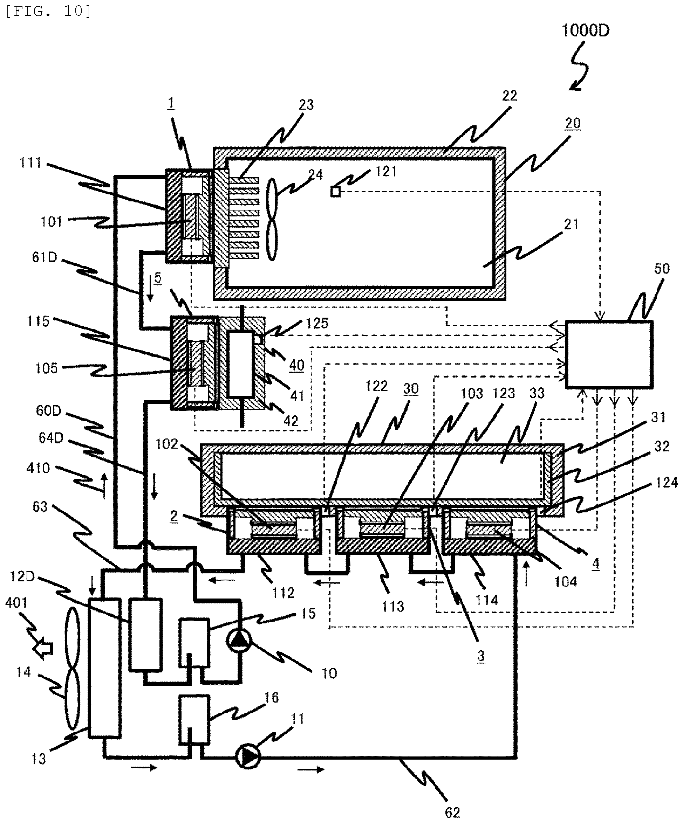

An automatic analysis device according to Example 5 of the present invention will be described with reference to Fig. 10. Fig. 10 is a configurational diagram of the automatic analysis device and a temperature adjustment mechanism thereof according to Example 5.

As illustrated in Fig. 10, in contrast with the automatic analysis device 1000 of Example 1, an automatic analysis device 1000D of this Example is provided with a reagent temperature adjusting unit 40 of the replacement liquid as a portion adjusted to a relatively high temperature. It is noted that the temperature adjusting unit of a cleaning liquid and the like can have the same configuration.

A replacement liquid tank 41 provided in the reagent temperature adjusting unit 40 is a container or a spiral pipe made of a metal such as stainless steel and is covered with a metal block 42 such as aluminum.

The metal block 42 is connected to a Peltier unit 5, and by cooling and heating the side of the metal block 42 of the Peltier element 105 incorporated in the Peltier unit 5, the metal block 42 is cooled and heated, and the replacement liquid of the inside of the replacement liquid tank 41 is cooled and heated.

Since the configuration of the Peltier unit 5 is the same as that of the Peltier unit 1 and the like, the details thereof will be omitted.

The Peltier element 105 is controlled by the control device 50 so that the temperature of a temperature sensor 125 provided in the metal block 42 portion becomes the target temperature.

The heat sink 115 of the Peltier unit 5 is connected to the downstream side of the heat sink 111 of the Peltier unit 1 of the air-conditioned space 20 by the tube 61 of the circulating liquid. The tube 64 of the circulating liquid discharged from the heat sink 115 is connected to a first radiator 12D.

Other configurations and operations are substantially the same as those of the automatic analysis device 1000 of Example 1 described above, and details are omitted.

In such the automatic analysis device 1000D of this Example, considered is the case where the temperature around the device is relatively low due to in the winter or the like, but the temperature around the device is higher than the target temperature of the reagent storage unit 30.

In this case, the temperature detected by the temperature sensor 121 of the air-conditioned space 20 and the temperature detected by the temperature sensor 125 of the reagent temperature adjusting unit 40 will be lower than the respective target temperatures, and the temperature detected by the temperature sensors 122, 123, and 124 of the reagent storage unit 30 becomes higher than the target temperature.

For this reason, the Peltier element 101 performs the operation of heating the side of the air-conditioned space 20, and the Peltier element 105 performs the operation of heating the metal block 42. Accordingly, the circulating liquid is cooled by the heat sinks 111 and 115 and transported to the first radiator 12D.

On the other hand, the Peltier elements 102, 103, and 104 perform the operation of cooling the side of the reagent storage unit 30, and the circulating liquid is heated in the heat sinks 112, 113, and 114 to be transported to the second radiator 13. In this case, since the air cooled by heat exchange in the first radiator 12D cools the second radiator 13, the amount of heat dissipated from the second radiator 13 is increased, and the reagent storage unit 30 can be cooled with a smaller current of the Peltier elements 102, 103, and 104.

Therefore, similarly to the automatic analysis device 1000 of Example 1 described above, in the automatic analysis device 1000D of Example 5 of the present invention, it is possible to perform the temperature control with lower power consumption.

It is noted that, in this example, the case where the reagent temperature adjusting unit 40 is added to Example 1 has been described, but the same effect of power saving can be obtained even when the reagent temperature adjusting unit 40 is added to any of the configurations of Examples 2, 3, and 4.

In the above description, a target to be adjusted to a relatively high temperature has been described as an example of an air-conditioned space and a reagent temperature adjusting unit for processing reagents, but the present invention can also be applied to temperature control and the like of the analysis unit 500 that performs analysis of the specimen illustrated in Fig. 1.

### Reference Signs List

1: Peltier unit (air conditioning unit)
2, 2C: Peltier units (reagent storage temperature adjusting unit)
3, 3C: Peltier units (reagent storage temperature adjusting unit)
4, 4C: Peltier units (reagent storage temperature adjusting unit)
5: Peltier unit
10, 11: Pumps (liquid supply unit)
12, 12A, 12B, 12C, 12D: First radiators
13, 13A, 13B: Second radiators (heat dissipation unit)
14, 14A, 14B, 14C, 17: Radiator fans (air blower)
15, 16: Tanks
20: Air-conditioned space (space where reagent is used)
21: Internal air of the air-conditioned space
22: Insulating material
23: Internal fin
24: Base
25: Fan
30: Reagent storage unit
31: Internal space
32: Metal container
33: Insulating material
40: Reagent temperature adjusting unit
41: Replacement liquid tank
42: Metal block
50: Control device
60, 60D, 61, 61D, 64D: Tubes (first liquid flow path)
60A: Tube (sixth liquid flow path)
61A: Tube (seventh liquid flow path)
62, 63: Tubes (second liquid flow path)
63A: Tube (fourth liquid flow path)
64A: Tube (third liquid flow path)
65A: Tube (fifth liquid flow path)
71, 86: Ducts
71A: Flow path (first airflow path)
71B: Flow path (second airflow path)
71C: Flow path (third airflow path)
72: Damper (first flow path switching unit)
73, 88: Fans
74: Air inlet port (first air inlet port)
75, 90: Partition
80, 81, 82: Air cooling fins
83, 84, 85: Fans
86A: Flow path (fourth airflow path)
86B: Flow path (fifth airflow path)
86C: Flow path (sixth airflow path)
87: Damper (second flow path switching unit)
89: Air inlet port (second air inlet port)
101: Peltier element (first Peltier element)
102, 103, 104: Peltier elements (second Peltier element)
105: Peltier element
111: Heat sink (first heat sink)
112, 113, 114: Heat sinks (second heat sink)
115: Heat sink
121, 122, 123, 124, 125: Temperature sensors
201, 202, 204: Thermal interfaces
203: Heat diffusion plate
205: Insulating material
206: Space
207: Bolt
210: Casing
211,212: Tube connector
213: Fin
214: Flow path
215: Partition
216: Hole
301, 303: Inlet connector
302, 304: Outlet connector
305: Flow path
306: Fin
307: Header
308: Footer
309: Turn unit
401, 402, 404, 405, 406, 407, 410: Arrows
500: Analysis unit
1000, 1000A, 1000B, 1000C, 1000D: Automatic analysis devices

## Claims

1. An automatic analysis device (1000, 1000A, 1000B, 1000C, 1000D) which reacts a specimen with a reagent and measures physical properties of a reacted reaction solution, the device comprising:
a space (20) which is partitioned from surroundings and where the reagent is used;
an air conditioning unit (1) which includes a first Peltier element (101) for adjusting an air temperature of the space (20);
a first heat sink (111) which cools or heats the air conditioning unit (1) with a liquid refrigerant;
a first radiator (12, 12A, 12B, 12C, 12D) which performs heat exchange between the liquid refrigerant which has exchanged heat with the first heat sink (111) and air in the atmosphere;
a liquid supply unit (10, 11) which circulates the liquid refrigerant;
a reagent storage unit (30) which keeps the reagent cool and stores the reagent;
a reagent storage temperature adjusting unit (2, 3, 4, 2C, 3C, 4C) which includes a second Peltier element (102, 103, 104) for adjusting the temperature of the reagent storage unit (30);
a second heat sink (112, 113, 114) which cools or heats the second Peltier element (102, 103, 104) with the liquid refrigerant or air; and
a heat dissipation unit which dissipates heat of the liquid refrigerant or air which has exchanged heat with the second heat sink (112, 113, 114),
wherein the first radiator (12, 12A, 12B, 12C, 12D) and the heat dissipation unit are disposed so as to perform heat exchange therebetween.

2. The automatic analysis device (1000, 1000A, 1000B, 1000D) according to claim 1, further comprising:
a second radiator (13, 13A, 13B) as the heat dissipation unit which performs heat exchange with the liquid refrigerant which has exchanged heat with the second heat sink (112, 113, 114) and the air in the atmosphere.

3. The automatic analysis device (1000, 1000B, 1000D) according to claim 2, wherein
a first loop, in which the first heat sink (111), the first radiator (12, 12B, 12C, 12D), and the liquid supply unit are connected to each other by a first liquid flow path, and
a second loop, in which the second heat sink (112, 113, 114), the second radiator (13, 13B), and a second liquid supply unit for circulating the liquid refrigerant are connected to each other by a second liquid flow path, are formed.

4. The automatic analysis device (1000, 1000D) according to claim 3, further comprising
an air blower (14) which flows the air in the atmosphere which has exchanged heat with the first radiator (12) and the second radiator (13),
wherein the first radiator (12) and the second radiator (13) are disposed in series such that the first radiator (12) is on an upstream side in an airflow generated by the air blower (14).

5. The automatic analysis device (1000, 1000D) according to claim 4, wherein
a heat exchange area of the first radiator (12) is smaller than a heat exchange area of the second radiator (13).

6. The automatic analysis device (1000A) according to claim 2, further comprising:
a third liquid flow path which guides the liquid refrigerant which has exchanged heat with the first radiator (12A) to the second heat sink (112, 113, 114);
a fourth liquid flow path which guides the liquid refrigerant which has exchanged heat with the second heat sink (112, 113, 114) to the second radiator (13A);
a fifth liquid flow path which guides the liquid refrigerant which has exchanged heat with the second radiator (13A) to the liquid supply unit;
a sixth liquid flow path which guides the liquid from the liquid supply unit to the first heat sink (111); and
a seventh liquid flow path which guides the liquid refrigerant which has exchanged heat with the first heat sink (111) to the first radiator (12A).

7. The automatic analysis device (1000B) according to claim 2, comprising:
a first airflow path which guides the air that has exchanged heat with the second radiator (13B) to an exhaust port or the first radiator (12B);
a second airflow path in which the first radiator (12B) is disposed which guides the air supplied from the first airflow path to the outside through the first radiator (12B);
a third airflow path that directly guides the air supplied from the first airflow path to the outside;
a first air inlet port (74) which is provided at a position in front of the first radiator (12B) of the second airflow path and guides air from the outside of the second airflow path to the second airflow path;
a first flow path switching unit (72) that switches the air guided to the second airflow path between the air from the first airflow path and the air from the first air inlet port (74).

8. The automatic analysis device (1000C) according to claim 1, comprising:
a fourth airflow path as the heat dissipation unit which guides the air that has exchanged heat with the second heat sink (112, 112, 114) to an exhaust port or the first radiator (12C);
a fifth airflow path in which the first radiator (12C) is disposed and which guides the air supplied from the fourth airflow path to the outside through the first radiator (12C);
a sixth airflow path which guides the air supplied from the fourth airflow path directly to the outside;
a second air inlet port (89) which is provided at a position in front of the first radiator (12C) of the fifth airflow path and guides air from the outside of the fifth airflow path to the fifth airflow path; and
a second flow path switching unit (87) which switches the air guided to the fifth airflow path between the air from the fourth airflow path and the air from the second air inlet port (89).

## Patentansprüche

1. Automatische Analysevorrichtung (1000, 1000A, 1000B, 1000C, 1000D), die eine Probe mit einem Reagens umsetzt und physikalische Eigenschaften einer umgesetzten Reaktionslösung misst, wobei die Vorrichtung Folgendes umfasst:
einen Raum (20), der von der Umgebung getrennt ist und in dem das Reagens verwendet wird;
eine Klimaanlage (1), die ein erstes Peltier-Element (101) zum Einstellen der Lufttemperatur des Raums (20) umfasst;
eine erste Wärmesenke (111), die die Klimaanlage (1) mit einem flüssigen Kühlmittel kühlt oder erwärmt;
einen ersten Radiator (12, 12A, 12B, 12C, 12D), der einen Wärmeaustausch zwischen dem flüssigen Kühlmittel, das Wärme mit der ersten Wärmesenke (111) ausgetauscht hat, und Luft in der Atmosphäre durchführt;
eine Flüssigkeitszufuhreinheit (10, 11), die das flüssige Kühlmittel zirkuliert;
eine Reagensspeichereinheit (30), die das Reagens kühl hält und das Reagens speichert;
eine Reagensspeichertemperatureinstelleinheit (2, 3, 4, 2C, 3C, 4C), die ein zweites Peltier-Element (102, 103, 104) zum Einstellen der Temperatur der Reagensspeichereinheit (30) umfasst;
eine zweite Wärmesenke (112, 113, 114), die das zweite Peltier-Element (102, 103, 104) mit dem flüssigen Kühlmittel oder Luft kühlt oder erwärmt; und
eine Wärmeableitungseinheit, die Wärme des flüssigen Kühlmittels oder der Luft, das/die Wärme mit dem zweiten Wärmesenke (112, 113, 114) ausgetauscht hat, ableitet,
wobei der erste Radiator (12, 12A, 12B, 12C, 12D) und die Wärmeableitungseinheit so angeordnet sind, dass sie zwischen sich Wärmeaustausch durchführen.

2. Automatische Analysevorrichtung (1000, 1000A, 1000B, 1000D) nach Anspruch 1, ferner umfassend:
einen zweiten Radiator (13, 13A, 13B) als die Wärmeableitungseinheit, die einen Wärmeaustausch zwischen dem flüssigen Kühlmittel, das mit der zweiten Wärmesenke (112, 113, 114) Wärme ausgetauscht hat, und der Luft in der Atmosphäre durchführt.

3. Automatische Analysevorrichtung (1000, 1000B, 1000D) nach Anspruch 2, wobei
eine erste Schleife, in der die erste Wärmesenke (111), der erste Radiator (12, 12B, 12C, 12D) und die Flüssigkeitszufuhreinheit durch einen ersten Flüssigkeitsströmungspfad miteinander verbunden sind, und
eine zweite Schleife, in der der zweite Wärmesenke (112, 113, 114), der zweite Radiator (13, 13B) und eine zweite Flüssigkeitszufuhreinheit zum Zirkulieren des flüssigen Kühlmittels durch einen zweiten Flüssigkeitsströmungspfad miteinander verbunden sind, ausgebildet sind.

4. Automatische Analysevorrichtung (1000, 1000D) nach Anspruch 3, ferner umfassend:
ein Luftgebläse (14), das Luft in die Atmosphäre, die Wärme mit dem ersten Radiator (12) und dem zweiten Radiator (13) ausgetauscht hat, ausströmt,
wobei der erste Radiator (12) und der zweite Radiator (13) in Serie angeordnet sind, sodass der erste Radiator (12) sich in einer vom Luftgebläse (14) erzeugten Luftströmung auf einer Stromaufseite befindet.

5. Automatische Analysevorrichtung (1000, 1000D) nach Anspruch 4, wobei
eine Wärmeaustauschfläche des ersten Radiators (12) kleiner ist als eine Wärmeaustauschfläche des zweiten Radiators (13).

6. Automatische Analysevorrichtung (1000A) nach Anspruch 2, ferner umfassend:
einen dritten Flüssigkeitsströmungspfad, der das flüssige Kühlmittel, das Wärme mit dem ersten Radiator (12A) ausgetauscht hat, zur zweiten Wärmesenke (112, 113, 114) leitet;
einen vierten Flüssigkeitsströmungspfad, der das flüssige Kühlmittel, das Wärme mit der zweiten Wärmesenke (112, 113, 114) ausgetauscht hat, zum zweiten Radiator (13A) leitet;
einen fünften Flüssigkeitsströmungspfad, der das flüssige Kühlmittel, das Wärme mit dem zweiten Radiator (13A) ausgetauscht hat, zur Flüssigkeitszufuhreinheit leitet;
einen sechsten Flüssigkeitsströmungspfad, der die Flüssigkeit von der Flüssigkeitszufuhreinheit zur ersten Wärmesenke (111) leitet; und
einen siebten Flüssigkeitsströmungspfad, der das flüssige Kühlmittel, das Wärme mit der ersten Wärmesenke (111) ausgetauscht hat, zum ersten Radiator (12A) leitet.

7. Automatische Analysevorrichtung (1000B) nach Anspruch 2, umfassend:
einen ersten Luftströmungspfad, der die Luft, die Wärme mit dem zweiten Radiator (13B) ausgetauscht hat, zu einer Auslassöffnung oder zum ersten Radiator (12B) leitet;
einen zweiten Luftströmungspfad, in dem der erste Radiator (12B) angeordnet ist, der die von dem ersten Luftströmungspfad zugeführte Luft durch den ersten Radiator (12B) nach außen leitet;
einen dritten Luftströmungspfad, der die vom ersten Luftströmungspfad zugeführte Luft direkt nach außen leitet;
eine erste Lufteinlassöffnung (74), die an einer Position gegenüber dem ersten Radiator (12B) des zweiten Luftströmungspfads bereitgestellt ist und Luft von außerhalb des zweiten Luftströmungspfads zum zweiten Luftströmungspfad leitet;
eine erste Strömungspfadschalteinheit (72), die die Luft, die zum zweiten Luftströmungspfad geleitet wird, zwischen der Luft vom ersten Luftströmungspfad und der Luft von der ersten Lufteinlassöffnung (74) umschaltet.

8. Automatische Analysevorrichtung (1000C) nach Anspruch 1, umfassend:
einen vierten Luftströmungspfad als Wärmeableitungseinheit, der die Luft, die Wärme mit der zweiten Wärmesenke (112, 113, 114) ausgetauscht hat, zu einer Auslassöffnung oder dem ersten Radiator (12C) leitet;
einen fünften Luftströmungspfad, in dem der erste Radiator (12C) angeordnet ist und der die Luft, die von dem vierten Luftströmungspfad zugeführt wird, über den ersten Radiator (12C) nach außen leitet;
einen sechsten Luftströmungspfad, der die Luft, die von dem vierten Luftströmungspfad zugeführt wird, direkt nach außen leitet;
eine zweite Lufteinlassöffnung (89), die an einer Position gegenüber dem ersten Radiator (12C) des fünften Luftströmungspfads bereitgestellt ist und Luft von außerhalb des fünften Luftströmungspfad zum fünften Luftströmungspfad leitet; und
eine zweite Strömungspfadschalteinheit (87), die die Luft, die zum fünften Luftströmungspfad geleitet wird, zwischen der Luft vom vierten Luftströmungspfad und der Luft von der zweiten Lufteinlassöffnung (89) umschaltet.

## Revendications

1. Dispositif d'analyse automatique (1000, 1000A, 1000B, 1000C, 1000D) qui fait réagir un échantillon avec un réactif et mesure des propriétés physiques d'une solution de réaction ayant réagi, le dispositif comprenant :
un espace (20) qui est séparé de l'environnement et dans lequel le réactif est utilisé ;
une unité de climatisation (1) qui inclut un premier élément à effet Peltier (101) pour ajuster une température d'air de l'espace (20) ;
un premier dissipateur thermique (111) qui refroidit ou chauffe l'unité de climatisation (1) à l'aide d'un réfrigérant liquide ;
un premier radiateur (12, 12A, 12B, 12C, 12D) qui effectue un échange de chaleur entre le réfrigérant liquide qui a échangé de la chaleur avec le premier dissipateur thermique (111) et de l'air dans l'atmosphère ;
une unité d'alimentation en liquide (10, 11) qui fait circuler le réfrigérant liquide ;
une unité de stockage de réactif (30) qui maintient le réactif au frais et stocke le réactif ;
une unité d'ajustement de température de stockage de réactif (2, 3, 4, 2C, 3C, 4C) qui comprend un second élément à effet Peltier (102, 103, 104) pour ajuster la température de l'unité de stockage de réactif (30) ;
un second dissipateur thermique (112, 113, 114) qui refroidit ou chauffe le second élément à effet Peltier (102, 103, 104) avec le réfrigérant liquide ou de l'air ; et
une unité de dissipation de chaleur qui dissipe de la chaleur du réfrigérant liquide ou de l'air qui a échangé de la chaleur avec le second dissipateur thermique (112, 113, 114),
dans lequel le premier radiateur (12, 12A, 12B, 12C, 12D) et l'unité de dissipation de chaleur sont disposés de manière à effectuer un échange de chaleur entre ceux-ci.

2. Dispositif d'analyse automatique (1000, 1000A, 1000B, 1000D) selon la revendication 1, comprenant en outre :
un second radiateur (13, 13A, 13B) en tant qu'unité de dissipation de chaleur qui effectue un échange de chaleur avec le réfrigérant liquide qui a échangé de la chaleur avec le second dissipateur thermique (112, 113, 114) et l'air dans l'atmosphère.

3. Dispositif d'analyse automatique (1000, 1000B, 1000D) selon la revendication 2, dans lequel
une première boucle, dans laquelle le premier dissipateur thermique (111), le premier radiateur (12, 12B, 12C, 12D) et l'unité d'alimentation en liquide sont connectés mutuellement par un premier trajet d'écoulement de liquide, et
une seconde boucle, dans laquelle le second dissipateur thermique (112, 113, 114), le second radiateur (13, 13B) et une seconde unité d'alimentation en liquide pour faire circuler le réfrigérant liquide sont connectés mutuellement par un deuxième trajet d'écoulement de liquide, sont formées.

4. Dispositif d'analyse automatique (1000, 1000D) selon la revendication 3, comprenant en outre
une soufflante d'air (14) qui fait circuler l'air dans l'atmosphère qui a échangé de la chaleur avec le premier radiateur (12) et le second radiateur (13),
dans lequel le premier radiateur (12) et le second radiateur (13) sont disposés en série de sorte que le premier radiateur (12) est sur un côté amont dans un flux d'air généré par la soufflante d'air (14).

5. Dispositif d'analyse automatique (1000, 1000D) selon la revendication 4, dans lequel
une aire d'échange de chaleur du premier radiateur (12) est inférieure à une aire d'échange de chaleur du second radiateur (13).

6. Dispositif d'analyse automatique (1000A) selon la revendication 2, comprenant en outre :
un troisième trajet d'écoulement de liquide qui guide le réfrigérant liquide qui a échangé de la chaleur avec le premier radiateur (12A) vers le second dissipateur thermique (112, 113, 114) ;
un quatrième trajet d'écoulement de liquide qui guide le réfrigérant liquide qui a échangé de la chaleur avec le second dissipateur thermique (112, 113, 114) vers le second radiateur (13A) ;
un cinquième trajet d'écoulement de liquide qui guide le réfrigérant liquide qui a échangé de la chaleur avec le second radiateur (13A) vers l'unité d'alimentation en liquide ;
un sixième trajet d'écoulement de liquide qui guide le liquide de l'unité d'alimentation en liquide vers le premier dissipateur thermique (111) ; et
un septième trajet d'écoulement de liquide qui guide le réfrigérant liquide qui a échangé de la chaleur avec le premier dissipateur de chaleur (111) vers le premier radiateur (12A).

7. Dispositif d'analyse automatique (1000B) selon la revendication 2, comprenant :
un premier trajet d'écoulement d'air qui guide l'air qui a échangé de la chaleur avec le second radiateur (13B) vers un orifice d'évacuation ou le premier radiateur (12B) ;
un deuxième trajet d'écoulement d'air dans lequel le premier radiateur (12B) est disposé, qui guide l'air fourni à partir du premier trajet d'écoulement d'air vers l'extérieur à travers le premier radiateur (12B) ;
un troisième trajet d'écoulement d'air qui guide directement l'air fourni à partir du premier trajet d'écoulement d'air vers l'extérieur ;
un premier orifice d'entrée d'air (74) qui est prévu dans une position en avant du premier radiateur (12B) du deuxième trajet d'écoulement d'air et guide l'air depuis l'extérieur du deuxième trajet d'écoulement d'air vers le deuxième trajet d'écoulement d'air ;
une première unité de commutation de trajet d'écoulement (72) qui commute l'air guidé vers le deuxième trajet d'écoulement d'air entre l'air provenant du premier trajet d'écoulement d'air et l'air provenant du premier orifice d'entrée d'air (74).

8. Dispositif d'analyse automatique (1000C) selon la revendication 1, comprenant :
un quatrième trajet d'écoulement d'air en tant qu'unité de dissipation de chaleur qui guide l'air qui a échangé de la chaleur avec le second dissipateur thermique (112, 112, 114) vers un orifice d'évacuation ou le premier radiateur (12C) ;
un cinquième trajet d'écoulement d'air dans lequel le premier radiateur (12C) est disposé, et qui guide l'air alimenté à partir du quatrième trajet d'écoulement d'air vers l'extérieur à travers le premier radiateur (12C) ;
un sixième trajet d'écoulement d'air qui guide l'air alimenté à partir du quatrième trajet d'écoulement d'air directement vers l'extérieur ;
un second orifice d'entrée d'air (89) qui est prévu dans une position en avant du premier radiateur (12C) du cinquième trajet d'écoulement d'air et guide l'air depuis l'extérieur du cinquième trajet d'écoulement d'air vers le cinquième trajet d'écoulement d'air ; et
une seconde unité de commutation de trajet d'écoulement (87) qui commute l'air guidé vers le cinquième trajet d'écoulement d'air entre l'air provenant du quatrième trajet d'écoulement d'air et l'air provenant du second orifice d'entrée d'air (89).
